Europäisches Patentamt

**European Patent Office**

**Office européen des brevets**

(11) Veröffentlichungsnummer: **0 354 870**

**A2**

(12) **EUROPÄISCHE PATENTANMELDUNG**

(21) Anmeldenummer: **89810509.3**

(22) Anmeldetag: **04.07.89**

(51) Int. Cl.5: **A 61 C 3/06**

(30) Priorität: **09.08.88 CH 3006/88**

(43) Veröffentlichungstag der Anmeldung:
**14.02.90 Patentblatt 90/07**

(84) Benannte Vertragsstaaten:
**BE CH DE ES FR GB IT LI SE**

(71) Anmelder: **GEBRÜDER SULZER
AKTIENGESELLSCHAFT
Zürcherstrasse 9
CH-8401 Winterthur (CH)**

(72) Erfinder: **Goetz, Roland, Dr.
Wieshofstrasse 58
CH-8408 Winterthur (CH)**

(54) **Dental-Schleifband.**

(57) Das neue Dental-Schleifband für Zähne und Zahnfüllungen besteht aus einem aus der Schmelze erstarrten folienartigen Metallband, in dessen homogener Metallmatrix als Hartpartikel Zeta-Chromborid-Teilchen fixiert sind. Das neue Band ist einfach herstellbar und bietet erhöhte Sicherheit gegen Ausbrechen der Hartpartikel.

EP 0 354 870 A2

Bundesdruckerei Berlin

## Beschreibung

### Dental-Schleifband

Die Erfindung betrifft ein Dental-Schleifband aus Metall für Zähne und Zahnfüllungen, das einseitig mit als Abrasionsmittel wirkenden Hartpartikeln belegt ist, die in eine Metallmatrix eingelagert sind.

Schleifbänder der genannten Art sind unter der Bezeichnung Finir- und Polierstreifen bekannt. Sie bestehen bisher aus gewalzten Bändern aus gewöhnlichem Stahl, die galvanisch beidseitig mit Nickel beschichtet sind; in die Nickelschicht einer Seite sind dann Hartpartikel, z.B. aus Aluminiumoxid (Korund), eingebracht, die durch eine zusätzliche galvanisch aufgebrachte Nickel-Schicht gehalten werden. Die Gesamtdicke dieser mehrschichtigen Bänder beträgt etwa 0,1 mm; sie werden in verschiedenen Breiten in der Grössenordnung von einigen Millimetern und in Längen von beispielsweise 15 cm angeboten.

Das Walzen des Stahlbandes und die anschliessenden Beschichtungen sowie das Einbringen der Hartpartikel in eine der Nickelschichten erfordern relativ zeitraubende und aufwendige Herstellungsverfahren dieser in der zahnärztlichen Praxis einen Wegwerfartikel bildenden Bänder.

Darüberhinaus hat sich gezeigt, dass die in der geschilderten Weise fixierten Hartpartikel relativ leicht aus der Nickelmatrix ausbrechen können.

Aufgabe der Erfindung ist es, die Herstellung derartiger Bänder zu vereinfachen und die Verankerung der Hartpartikel in der Metallmatrix zu verbessern; darüberhinaus wird angestrebt, die herstellbaren Dicken zu verringern und als Folge der geringeren Dicken die Flexibilität der Bänder zu erhöhen.

Diese Aufgabe wird mit der Erfindung dadurch gelöst, dass das Schleifband aus einem aus der Schmelze erstarrten, folienartigen Metallband mit einer maximalen Dicke von 1 mm besteht, in dessen homogener Metallmatrix die Hartpartikel beim Erstarren fixiert sind.

Für die Herstellung des neuen Bandes hat sich besonders das bekannte Melt-Spinning-Verfahren als vorteilhaft erwiesen, wobei für die Metallmatrix sich Legierungen bewährt haben, die mindestens enthalten mindestens ein Element der Gruppe VIIIA, mindestens ein Element der Gruppen IVA, VA und VIA und mindestens eines der Elemente Bor, Kohlenstoff, Silizium oder Phosphor. Als Hartpartikel können dabei eingesetzt werden Metallboride, -karbide, -nitride, -oxide, -phosphide, -silizide oder Diamant.

Es ist sowohl möglich, die Hartpartikel als körniges Material in die Schmelze der Metallmatrix in der Melt-Spinning-Anlage einzubringen, wie das beispielsweise in der EP-A-2785 beschrieben ist. Beim Erstarren des Bandes sammeln sich die Hartpartikel dann einseitig an dessen freier Oberfläche an.

Als besonders vorteilhaft hat sich jedoch erwiesen, wenn die Hartpartikel als Primärausscheidungen aus der Schmelze vorliegen. Die Herstellung eines solchen Bandes ist in der CH-Anmeldung 341/88-0 beschrieben.

Die neuen Bänder können dabei in Dicken von 20 bis 250 μm, gemessen zwischen der glatten Unterseite und den hervorstehenden Spitzen der Hartpartikel an der rauhen Oberfläche, hergestellt werden, wobei ihre resultierenden Rauhigkeiten, gemessen als Glättungstiefen $R_p$ (DIN 4762/1 oder ISO 4287/1) etwa zwischen 2 und 100 μm liegen.

Da nach dem Melt-Spinning-Verfahren hergestellte Bänder in relativ grossen Breiten - von beispielsweise 10 cm und mehr - herstellbar sind, ist das neue Schleifband auch als Schleif- und/oder als Trennscheibe zum Schleifen und Polieren von Zähnen und Zahnfüllungen und in der Zahnprothetik zum Schleifen von Prothesenformen geeignet. Bisher bestehen solche Scheiben mit Durchmessern von z.B. 8 bis 15 mm aus Kunststoff oder kunststoffbeschichtetem Gewebe oder Papier, die mit Hartpartikeln belegt sind. Die Hartpartikeln werden dabei mittels Klebern auf dem Substrat gehalten.

Aus Gründen der mechanischen Festigkeit muss das Substrat hier eine gewisse Mindestdicke haben, durch die die Flexibilität der Scheibe eingeschränkt wird; diese Flexibilität ist aber beim Schleifen unregelmässiger Konturen von erheblicher Bedeutung.

Wie bereis erwähnt, kann das neue Metallband sehr dünn ausgeführt werden, beispielsweise in Dicken bis herunter zu 20 um. Dadurch sind die neuen Schleifscheiben sehr flexibel. Trotz der erhöhten Flexibilität ist die Haftung der in die Metallmatrix eingebetteten "Abrasions"-Partikel besser als bei den bisherigen Schleif- oder Trennscheiben.

Nach dem in der CH-Anmeldung beschriebenen Herstellungsverfahren sind verschiedene Bänder hergestellt worden. In allen Beispielen sind dabei folgende "Parameter" konstant gehalten worden:
- Zusammensetzung der Vorlegierung (in Gewichts-%): 60 Ni; 13 Cr; 4 Fe; 8 Si; 14 B;
- Wiederaufschmelzen der Vorlegierung in 4 Minuten;
- anschliessendes Halten der wieder aufgeschmolzenen Vorlegierung bei 1060° C während einer Minute;
- Herstellung des Bandes nach dem Schmelzspinnverfahren mit einer Walze aus Cu-Cr-Legierung;
- Dicke des Bandes: 50 μm.
- Zeta-Chromborid-Ausscheidungen als Hartpartikel.

Um unterschiedliche Hartpartikel-Grössen und damit unterschiedliche Rauhigkeiten zu erzielen, sind variiert worden:
- die Kokille, in der die Vorlegierung abgegossen und zur Erstarrung gebracht worden ist;
- die Drehzahl der CuCr-Walze.

Beispiel 1:
Die Vorlegierung wird abgegossen in eine Zirkonoxid($ZrO_2$)-beschichtete Stahlkokille; die Drehzahl der Walze beträgt 1050 U/min; die resultierende Rauhigkeit beträgt, gemessen als Glättungstiefe $R_p$ nach DIN 4762/1 oder ISO 4287/1: 80 μm.

Beispiel 2:

Die Vorlegierung wird in eine unbeschichtete Stahlkokille abgegossen; die Drehzahl der Walze beträgt 1200 U/min; die resultierende Glättungstiefe $R_p$ beträgt 30 μm.

Beispiel 3:

Die Vorlegierung wird in die gleiche unbeschichtete Stahlkokille abgegossen; die Drehzahl der Walze beträgt jedoch nur 1000 U/min; die resultierende Glättungstiefe $R_p$ beträgt in diesem Fall 5 μm.

Beispiel 4:

Aus einem nach einem der Beispiele 1 bis 3 hergestellten Metallband werden, beispielsweise durch Stanzen oder Elektroerosion, Scheiben mit einem äusseren Durchmesser von 5 bis 12 mm herausgearbeitet und in ihrem Zentrum mit einem konzentrischen Loch versehen, das auf die für Schleif- oder Trennscheiben handelsüblichen Klemm- oder Schraubhalter abgestimmt ist.

Die so erhaltenen Schleifscheiben haben bei einer Dicke von 40 bis 60 μm beispielsweise Rauheiten mit Glättungstiefe $R_p$ von 10 bis 40 μm; andere Scheiben der gleichen Art haben, beispielsweise bei einer als resultierende Glättungstiefe $R_p$ gemessenen Rauheit von 80 μm, eine Dicke von 80 bis 100 μm.

## Patentansprüche

1. Dental-Schleifband aus Metall für Zähne und Zahnfüllungen, das einseitig mit als Abrasionsmittel wirkenden Hartpartikeln belegt ist, die in eine Metallmatrix eingelagert sind, dadurch gekennzeichnet, dass das Schleifband aus einem aus der Schmelze erstarrten, folienartigen Metallband mit einer maximalen Dicke von 1 mm besteht, in dessen Metallmatrix die Hartpartikel beim Erstarren fixiert sind.

2. Schleifband nach Anspruch 1, dadurch gekennzeichnet, dass die Metallmatrix mindestens enthält: mindestens ein Element der Gruppe VIIIA, mindestens ein Element der Gruppen IVA, VA oder VIA und mindestens eines der Elemente Bor, Kohlenstoff, Stickstoff, Sauerstoff, Silizium oder Phophor.

3. Schleifband nach Anspruch 1 oder 2, dadurch gekennzeichnet, dass als Hartpartikel mindestens ein Metallborid, -karbid, -nitrid, -oxid, -phosphid, -silizid oder Diamant dient.

4. Schleifband nach einem der Ansprüche 1 bis 3, dadurch gekennzeichnet, dass die Hartpartikel als primäre Ausscheidungen aus der Schmelze vorliegen.

5. Schleifband nach Anspruch 4, dadurch gekennzeichnet, dass mindestens 50 % der Hartpartikel eine skelettartige Kristallform mit einem Verhältnis Länge zu Breite von mindestens 5 aufweisen.

6. Schleifband nach Anspruch 5, dadurch gekennzeichnet, dass die Anzahl der skelettartigen Hartpartikel-Kristalle mindestens 70 % beträgt.

7. Schleifband nach Anspruch 5 oder 6, dadurch gekennzeichnet, dass die Hartpartikel eine einseitig rauhe Struktur mit hervorspringenden Spitzen erzeugen, die zu mindestens 80 % Hartpartikel enthalten.

8. Schleifband nach Anspruch 7, dadurch gekennzeichnet, dass bei den aus der Metallmatrix herausragenden Hartpartikeln mindestens 50 % ihrer Längsabmessung in die Matrix eingebettet bleibt.